# EUROPÄISCHE PATENTSCHRIFT

(11) **EP 1 175 822 B1**
(45) Veröffentlichungstag und Bekanntmachung des Hinweises auf die Patenterteilung: **20.04.2005**
(21) Anmeldenummer: 01111622.5
(22) Anmeldetag: 12.05.2001
(51) Int. Cl.: A01D 46/08, A01D 45/02

(54) **Antriebseinrichtung eines Erntevorsatzes**
Driving device for harvester head
Dispositif d'entraînement pour tête de récolte

(30) Priorität: 02.06.2000 US 586117
(43) Veröffentlichungstag der Anmeldung: 30.01.2002
(73) Patentinhaber: DEERE & COMPANY, Moline, Illinois 61265-8098 (US)
(72) Erfinder: Goering, Kevin Jacob, Cambridge, IA 50046 (US); Koesters, Brian Robert, Urbandale, IA 50322 (US)
(74) Vertreter: Holst, Sönke, Dr.

(56) Entgegenhaltungen:
- DE-A- 1 507 231
- FR-A- 1 557 828
- FR-A- 1 563 968
- FR-A- 2 176 890
- FR-A- 2 466 179
- US-A- 5 311 728

## Beschreibung

Die Erfindung betrifft einen Erntevorsatz für eine Erntemaschine, mit einer in Querrichtung verstellbaren Ernteeinheit zur Ernte von Pflanzen und einer Antriebseinrichtung, wobei die Antriebseinrichtung eine sich quer zu einer Vorwärtsbewegungsrichtung des Erntevorsatzes erstreckende Antriebswelle, die um ihre Achse drehbar ist, ein Antriebszahnrad, das koaxial zur Antriebswelle angeordnet ist und durch die Antriebswelle antreibbar ist, und ein mit der Ernteeinheit verbundenes Zahnrad umfasst, das sich mit dem Antriebszahnrad im Eingriff befindet, das Antriebszahnrad auf der Antriebswelle verschiebbar angeordnet und derart mit der Ernteeinheit verbunden ist, dass es auch dann mit dem Zahnrad im Eingriff steht, wenn die Ernteeinheit quer verschoben wird.

Ein Erntevorsatz eingangs genannter Art wird in der FR 2 176 890 A beschrieben. Er umfasst einen Querträger, an dem mehrere Pflückeinheiten zum Einziehen von Maispflanzen und zum Abtrennen von Maiskolben abgestützt sind. Der Antrieb der Pflückeinheiten erfolgt durch eine sich quer zur Vorwärtsrichtung erstreckende Antriebswelle, die außerhalb des Querträgers und diesem gegenüber in Fahrtrichtung nach vorn versetzt angeordnet ist. Von der Antriebswelle wird bei jeder Pflückeinheit eine koaxial zur Antriebswelle angeordnete Rutschkopplung angetrieben, die abtriebsseitig mit einem Kegelzahnrad und zwei Hohlwellen in Antriebsverbindung steht. Das Kegelzahnrad treibt über mit ihm kämmende Kegelzahnräder die Pflückwalzen an, während die Hohlwellen über kämmende Kegelzahnräder die Einzugsketten der Pflückeinheit antreiben. Die genannten Elemente sind in einem Getriebegehäuse gelagert, das am Querträger befestigt ist. Die Pflückeinheiten mit den Getriebegehäusen lassen sich in Querrichtung verschieben, wobei sich die Rutschkopplung entlang der Antriebswelle bewegt. Es besteht keine Möglichkeit, die Pflückeinheiten um eine sich quer zur Vorwärtsrichtung und horizontal erstreckende Achse zu verschwenken, um sie einzeln in eine optimale Arbeitshöhe über dem Boden oder gemeinsam in eine Außerbetriebsstellung zu bewegen.

Die der Erfindung zugrunde liegende Aufgabe wird darin gesehen, eine verbesserte Antriebseinrichtung für eine Ernteeinrichtung mit in Querrichtung verstellbaren Ernteeinheiten bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Erntevorsatz weist wenigstens eine, in der Regel jedoch mehrere, quer zur Vorwärtsbewegungsrichtung verschiebbare Ernteeinheit bzw. Ernteeinheiten auf. Am Erntevorsatz ist eine quer verlaufende Antriebswelle angeordnet, welche ein Antriebszahnrad in Drehung versetzt, welches mit einem angetriebenen Zahnrad kämmt, das an der Ernteeinheit angeordnet ist. Das Antriebszahnrad ist auf der Antriebswelle mit der Ernteeinheit gemeinsam verschiebbar angeordnet, so dass es auch beim Verschieben der Ernteeinheit zur Anpassung an den Reihenabstand und danach mit dem angetriebenen Zahnrad im Eingriff steht. Erfindungsgemäß ist die Ernteeinheit um die Achse der Antriebswelle individuell schwenkbar am Erntevorsatz angebracht, insbesondere an einem Gehäuse, das einen quer verlaufenden Schneckenförderer enthält.

Die Antriebswelle kann eine Sechskantwelle sein, die entweder durchgehend ist oder durch Kupplungen verbundene kürzere Wellenabschnitte umfasst. Bei einer aus Wellenabschnitten zusammengesetzten Antriebswelle haben alle Ernteeinheiten gleichartige Wellen und die Kupplungen haben voneinander beabstandete Löcher zur Anpassung an die unterschiedlichen Reihenabstände, wobei diese Löcher an sich nur nötig sind, wenn der Verschiebeweg der Ernteeinheit größer als die Länge der einzelnen Wellen ist. Die gleichartigen Wellen und Kupplungen ermöglichen die erforderliche Flexibilität, während die Anzahl unterschiedlicher Teile zur Erzielung des gewünschten Reihenabstandes minimiert ist. Da die Wellen bei der Ernteeinheit verbleiben, ist eine Änderung der Anzahl der Ernteeinheiten am Erntevorsatz und eine Verbreiterung des Erntevorsatzes leichter und es bestehen weniger Möglichkeiten, Teile an falschen Stellen anzubringen. Wenn Erntebreiten erforderlich sind, die mit einer ursprünglichen Welle nicht realisierbar sind, kann eine Verlängerungswelle an die Antriebswelle angefügt werden. Der Erntevorsatz kann entweder links oder rechts oder an beiden Seiten verbreitert werden, ohne dass Änderungen an den ursprünglichen Antrieben der Ernteeinheiten erforderlich wären. Dadurch kann der Erntevorsatz schnell und einfach an die verschiedensten Reihenabstände angepasst werden.

Es bietet sich an, das Antriebszahnrad über eine Rutschkopplung mit der Antriebswelle zu koppeln. Jede der Rutschkopplungen eines mit mehreren Ernteeinheiten ausgestatteten Erntevorsatzes kann den maximalen Drehmomentsanforderungen der jeweiligen Ernteeinheit angepasst werden, so dass der Schutz jeder Ernteeinheit gegenüber Systemen, bei denen mehrere Antriebe mit jeder Kupplung verbunden sind, wesentlich verbessert ist.

Als Antriebszahnrad und als angetriebenes Zahnrad kommen insbesondere kegelförmige Zahnräder in Frage, da sie eine Umlenkung der Drehachse um 90° erlauben, so dass sich das angetriebene Zahnrad um eine parallel zur Vorwärtsrichtung verlaufende Achse drehen kann. Somit wird ein direkter Antrieb einer Abstreifwalze der Ernteeinheit möglich. Eine derartige Umlenkung ist aber auch mit geeignet geformten, flachen Zahnrädern oder mit einem Zahnrad, das mit einer Schnecke kämmt, möglich. Dadurch erübrigen sich die im Stand der Technik benötigten Universalverbinder und die damit verbundenen Schmierungsanforderungen und Phasenverschiebungsprobleme. Antriebsriemen mit gekrümmten Wegen sind vermieden. Die Antriebseinrichtung ist leichter und kompakter, hat ein verbessertes Kämmen der Zahnräder, weniger Geräuschentwicklung und ist zuverlässiger und kosteneffektiver als die meisten der bisher verfügbaren Antriebseinrichtungen.

In einer bevorzugten Ausführungsform ist das Antriebszahnrad und ggf. auch die Rutschkopplung zwischen Lagerzusammenbauten angeordnet, die mit der Ernteeinheit verbunden sind. Die Antriebswelle erstreckt sich durch die Lagerzusammenbauten. Das Antriebszahnrad und ggf. die Rutschkopplung werden beim Anpassen der Ernteeinheit an den jeweiligen Reihenabstand auf der Antriebswelle verschoben. Die Lagerzusammenbauten können durch einen kanalförmigen Träger bildende Elemente an der Ernteeinheit abgestützt sein.

Die Erfindung eignet sich für beliebige Erntevorsätze mit seitlich verschiebbaren Ernteeinheiten, wie Baumwollpflückern oder Maispflückern oder Maisgebissen.

In den Zeichnungen ist ein nachfolgend näher beschriebenes Ausführungsbeispiel der Erfindung dargestellt. Es zeigt:
- Fig. 1: eine Seitenansicht eines Baumwollernters mit einem in Querrichtung verstellbaren Ernteeinheiten tragenden Erntevorsatz,
- Fig. 2: eine perspektivische Ansicht eines Teils des Erntevorsatzes des Baumwollernters der Figur 1, wobei Teile entfernt wurden, um die einstellbare Antriebseinrichtung für die Ernteeinheiten besser darzustellen,
- Fig. 3: eine vergrößerte Draufsicht auf eine der Ernteeinheiten der Figur 2,
- Fig. 4: eine Seitenansicht der Ernteeinheit der Figur 3, und
- Fig. 5: eine vergrößerte Rückansicht der Ernteeinheit der Figur 3.

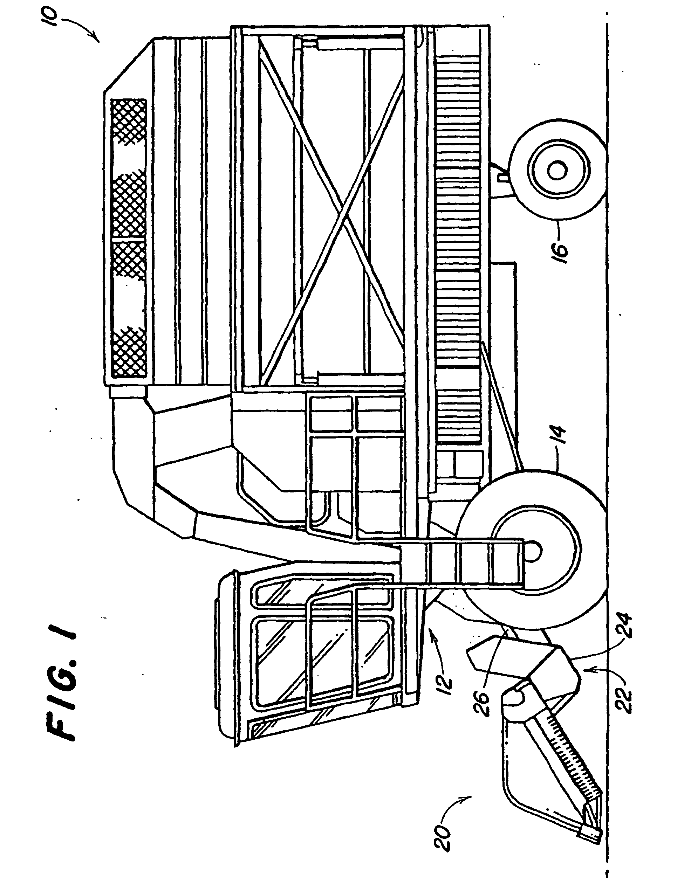

In Figur 1 ist ein Baumwollernter 10 des Pflückertyps gezeigt, der einen durch vordere Antriebsräder 14 und rückwärtige, lenkbare Räder 16 abgestützten Hauptrahmen 12 aufweist und zur Vorwärtsbewegung über ein mit parallelen Reihen von Baumwollpflanzen bepflanztes Feld eingerichtet ist. Den nachfolgenden Ausführungen ist voranzustellen, dass sich alle Richtungsangaben auf die Vorwärtsbewegungsrichtung des Baumwollernters 10 beziehen. Eine Vielzahl von Abstreifer-Ernteeinheiten 18 sind von einem Erntevorsatz 20 abgestützt, der einen sich quer erstreckenden Schneckenförderer 22 aufweist, der an einem Schneckenfördererrahmen 24 befestigt ist, welcher durch Hubarme 26 mit der Vorderseite des Hauptrahmens 12 verbunden ist. Die Ernteeinheiten 18 umfassen jeweils eine sich von vorn nach hinten erstreckende Abstreifeinrichtung 28, die eingerichtet ist, Teile von den Baumwollpflanzen der jeweiligen Reihe zu entfernen, und eine Fördereinrichtung 30, um das von den Pflanzen entfernte Material nach hinten zu transportieren und es dem Schneckenförderer 22 aufzugeben. Der Schneckenförderer 22 umfasst gegensinnig rotierende Wendel 32, um das ihm zugeführte Material nach innen zu einer zentralen Auslassstelle an der Rückseite des Schneckenförderers 22 zu verbringen, wo ein Luftkanalsystem 36 die Baumwolle nach oben und hinten zu einer Reinigungseinrichtung 38 und in einen vom Hauptrahmen 12 abgestützten Korb 40 fördert. Der Erntevorsatz 20 kann in verschiedenen Abmessungen und Anzahlen an Ernteeinheiten 18 konfiguriert sein, um eine Kapazität von vier, fünf, sechs oder acht Reihen und optional verschiedenen Leerreihenmustern bereitzustellen, wobei die Reihen in Reihenabständen angeordnet sind, die zwischen 76 cm (30 Zoll) und 100 cm (vierzig Zoll) variieren. Um die gewünschten Reihenabstände bereitzustellen, sind die Ernteeinheiten 18 am Schneckenfördererrahmen 24 quer verstellbar.

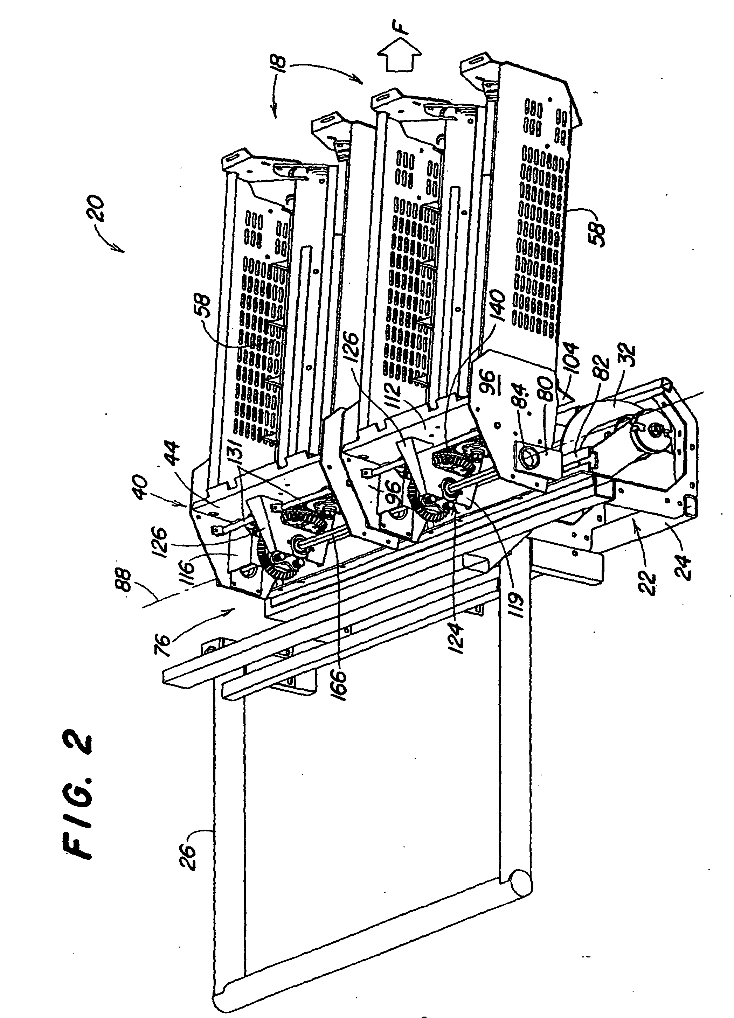

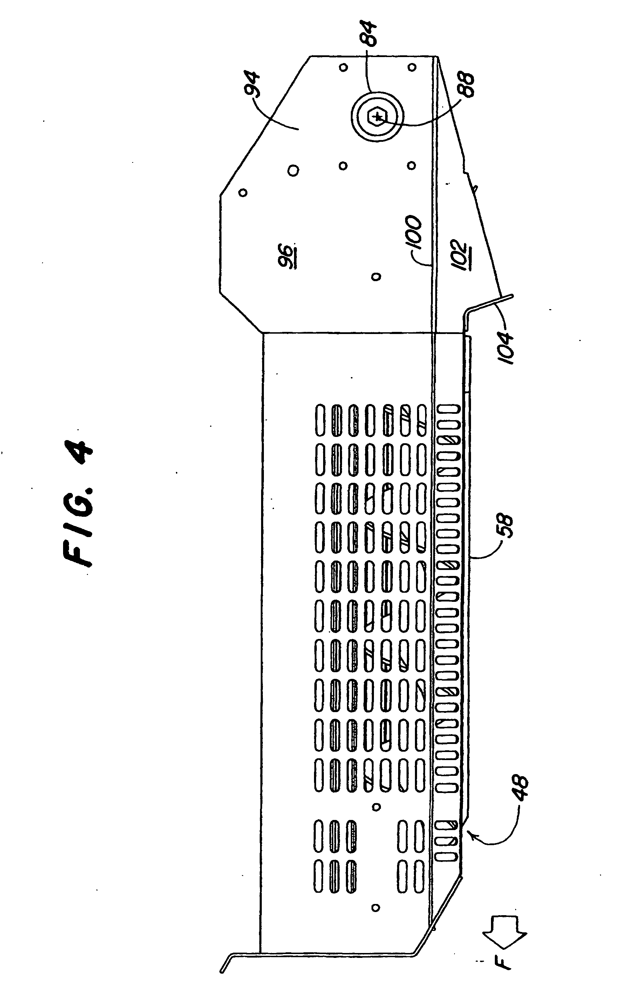

Jede der Ernteeinheiten (Figuren 2 bis 5) umfasst einen Rahmenzusammenbau 40 mit einem hinteren Bauelement 42, das eine vertikale, quer angeordnete Platte 44 umfasst. Ein Paar quer beabstandeter Träger 48 kragen vom unteren Bereich des hinteren Bauelements 42 aus. Die Träger 48 erstrecken sich nach vorn, um eine mittige Fläche 50, in der die Pflanzenreihen Aufnahme finden, und ein Paar von Schneckenförderertrögen 58 außerhalb und in der Nähe der Abstreifeinrichtung 28 zu definieren.

Die Abstreifeinrichtung 28 umfasst im Wesentlichen konventionelle Bürsten- oder Abstreiferwalzen 60, die um sich von vorn nach hinten erstreckende Achsen 62 drehbar gelagert sind. An der Außenseite jeder Abstreiferrolle 60 ist oberhalb des zugehörigen Schneckenförderertrogs 58 ein Schneckenförderer 70 um eine Achse 72 drehbar gelagert. Eine Antriebseinrichtung 76 für die Abstreiferwalzen 60 und die Schneckenförderer 70 ist hinter der Platte 44 angeordnet und treibt die Abstreifeinrichtung 28 und die Schneckenförderer 70 an. Abdeckungen 78 (Figur 1) für die Ernteeinheiten 18 sind an beiden Seiten der Fläche 50 zur Aufnahme der Pflanzenreihen oberhalb der Schneckenförderertröge 58 angeordnet. Mit Ausnahme des Bereichs der Ernteeinheit 18 nahe der Platte 44 und der Antriebseinrichtung 76 sind der Baumwollernter 10 und die Ernteeinheit 18 im Wesentlichen konventionellen Aufbaus und können von dem in der US 5 394 679 A gezeigten und beschriebenen Typs sein.

Die Ernteeinheit 18 ist durch einen in Querrichtung verstellbaren Halterungszusammenbau 80 (Figur 2), der auf einer Führungsschiene 82 abgestützt ist, schwenkbar mit dem Schneckenfördererrahmen 24 verbunden. Ein Lagerungszusammenbau 84 an jeder Seite der Ernteeinheit 18 ist in einer entsprechenden Öffnung am oberen Ende von Seitenbeinen des Halterungszusammenbaus 80 um eine quer verlaufende Achse 88 schwenkbar aufgenommen. Der Halterungszusammenbau 80 ist gegenüber den Führungsschienen 82 in der gewünschten Position durch (nicht gezeigte) Schrauben festgelegt, die lösbar sind, um das Gleiten des Halterungszusammenbaus 80 in die gewünschte, einem gegebenen Reihenabstand entsprechende Position zu erleichtern. Der Halterungszusammenbau 80 wird an der gewünschten, einem gegebenen Reihenabstand entsprechenden Position durch ein Anbringen einer (nicht gezeigten) Schraube in Öffnungen des Halterungszusammenbaus 80 und in einem oberen Winkelstück auf dem Schneckenfördererrahmen 24 befestigt. Diese Anordnung unterstützt die Positionierung der Ernteeinheit 18 und das Aufrechterhalten der Ausrichtung benachbarter Ernteeinheiten 18.

Ein Höhensteuerungszylinder 90 ist zwischen dem unteren Abschnitt der Ernteeinheit 18 und dem quer angeordneten Schneckenförderer 22 angeordnet, um die Ernteeinheit 18 um die Achse 88 zu verschwenken und sie in der zum Ernten der Baumwolle von den Pflanzen optimalen Höhe oberhalb des Erdbodens zu halten. Der Erntevorsatz 20 ist durch einen konventionellen (nicht gezeigte) Hubarmzylinderaufbau vertikal beweglich, der mit den Hubarmen 26 am Hauptrahmen 12 des Baumwollernters 10 in Wirkverbindung steht, um die Ernteeinheiten vertikal zwischen Transport- und Feldarbeitspositionen zu bewegen. Eine Schwenkwelle 91 ist mit einer konventionellen selbsttätigen Höhensteuerung mit (nicht gezeigten) Bodenfühlerkufen verbunden, um die Ernteeinheiten 18 im gewünschten Abstand oberhalb des Bodens zu halten.

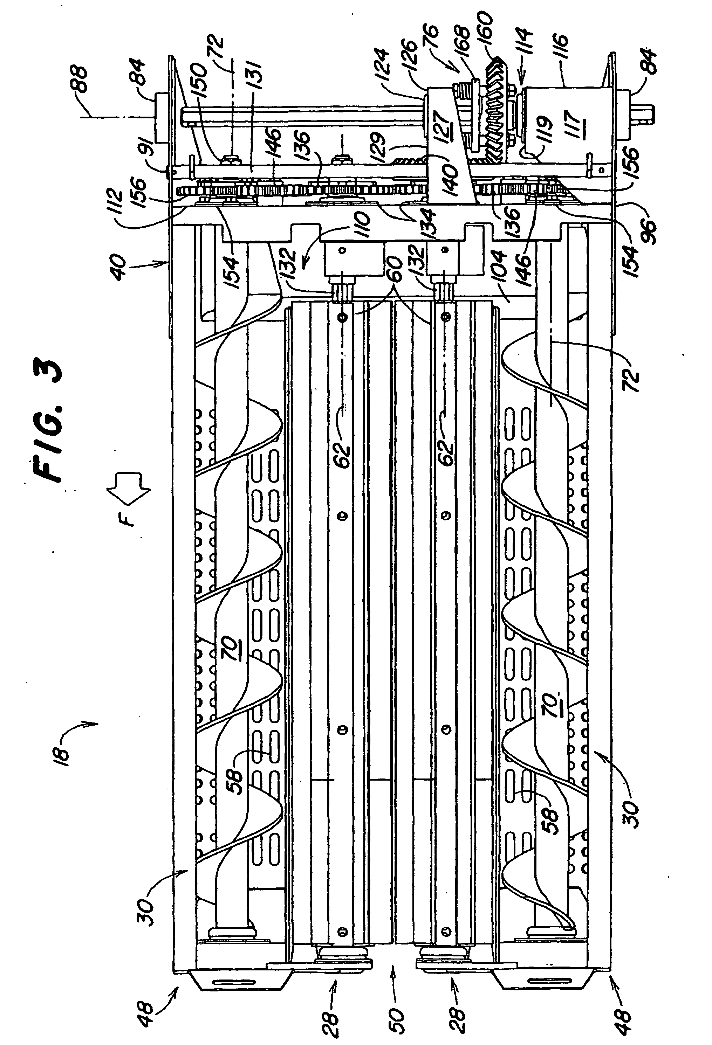

Die Lagerungszusammenbauten 84 sind in verstärkten Bereichen 94 gegenüberliegender rückwärtiger Seitenwände 96 des Gehäuses der Ernteeinheiten 18 abgestützt. Die Seitenwände 96 erstrecken sich von Bereichen oberhalb der Oberseite äußerer Abschnitte der Schneckenförderertröge 58 zu abgeknickten Bereichen 100 knapp unter den verstärkten Bereichen 94. Abgewinkelte Abschnitte 102 erstrecken sich nach vorn zu Verbindungsstellen mit einem sich quer erstreckenden Winkel 104, der an den hinteren Enden der Abstreiferwalzen 60 und der Schneckenförderer 70 angeordnet ist. Eine in Figur 3 insgesamt mit 110 gekennzeichnete Gutaufnahmeöffnung ist oberhalb des quer angeordneten Schneckenförderers 22 zwischen dem Winkel 104 und einer quer verlaufenden, senkrechten Wand 112 definiert, die sich zwischen den Seitenwänden 96 erstreckt.

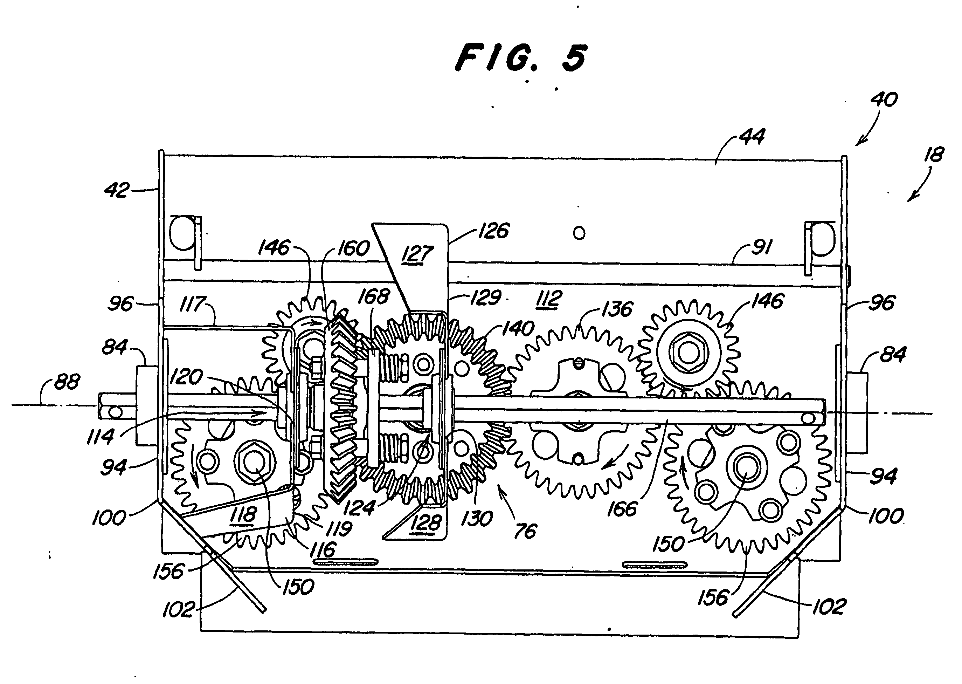

Ein linker Trägerlagerungszusammenbau 114 ist innen nahe der linken Seitenwand 96 (in der Vorwärtsrichtung der Figur 5 betrachtet) durch einen kanalförmigen Träger 116 abgestützt, der eine obere Platte 117, die über ihre Länge mit der Seitenwand 96 verbunden ist und eine untere Platte 118 aufweist, die mit dem entsprechenden abgewinkelten Abschnitt 102 verbunden ist. Eine flache Wand 119 erstreckt sich zwischen den Platten 117 und 118 und weist einen Schlitz 120 auf, der den Trägerlagerungszusammenbau 114 aufnimmt und relativ zur Schwenkachse 88 zentriert.

Ein Lagerzusammenbau 124 ist gegenüber dem Trägerlagerungszusammenbau 114 nach innen versetzt und liegt mit ihm gemeinsam ausgerichtet auf der Achse 88. Ein kanalförmiger Träger 126, der sich zum Trägerlagerungszusammenbau 114 öffnet, umfasst eine obere Platte 127, die ein vorderes, an der senkrechten Wand 112 befestigtes Ende aufweist. Eine untere Platte 128 umfasst ein vorderes, an der Wand 112 befestigtes Ende. Eine flache Wand 129 erstreckt sich parallel zur Wand 119 und weist einen Schlitz 130 auf, der den Lagerzusammenbau 124 aufnimmt und trägt. Der oben beschriebene Aufbau stellt eine starke und steife, aber relativ leichte kastenartige Befestigung für die Lagerzusammenbauten 114 und 124 bereit.

Die Abstreiferwalzen 60 umfassen Trägerwellen 132, die sich durch Lagerungen 134 erstrecken, die durch die Wand 112 abgestützt sind und mit identischen Antriebszahnrädern 136 verbunden sind, die in der Nähe der Wand 112 angeordnet sind. Die Antriebszahnräder 136 stehen untereinander im Eingriff, so dass die Abstreiferwalzen 60 sich gegensinnig um die parallelen Achsen 62 drehen. Ein kegelförmiges Zahnrad 140 ist direkt an der linken Welle 132 befestigt, so dass es sich mit den Antriebszahnrädern 136 um die linke Achse 62 dreht. Wie am Besten anhand der Figuren 2 und 5 erkennbar ist, umfasst die Wand 119 eine Öffnung, die das kegelförmige Zahnrad 140 aufnimmt. Zwischengeschaltete Zahnräder 146, die außerhalb und oberhalb der Achsen 62 an der Wand 112 abgestützt wird, stehen mit den entsprechenden Antriebszahnrädern 136 im Eingriff, um sich um parallel zu den Achsen 62 verlaufende Achsen zu drehen. Die hinteren Enden der Schneckenförderer 70 umfassen Antriebswellen 150, die sich durch Lagerungen 154 erstrecken und mit Schneckenfördererantriebszahnrädern 156 verbunden sind, die mit den zwischengeschalteten Zahnrädern 146 im Eingriff stehen. Die Zahnräder, Abstreifwalzen 60 und Schneckenförderer 70 drehen sich sämtlich um parallele, sich von vorn nach hinten erstreckende Achsen, die quer zur Wand 112 und zur Achse 88 verlaufen.

Ein kegelförmiges Antriebszahnrad 160 ist zwischen den Lagerzusammenbauten 114 und 124 abgestützt und durch eine sechseckige Antriebswelle 166 über eine Rutschkopplung 168 um die quer verlaufende Schwenkachse 88 drehbar. Der Trägerlagerungszusammenbau 114 hält das Antriebszahnrad 160 und die Rutschkupplung 168 in einer festen Querausrichtung mit dem Rest der Ernteeinheit 18. Das Antriebszahnrad 160 steht mit dem kegelförmigen Zahnrad 140 im Eingriff und treibt die Abstreifwalzen 60 und die Schneckenförderer 70 an. Die Abstreifwalzen 60 drehen sich gegensinnig und streifen Baumwolle und anderes Pflanzenmaterial von den Reihen der Baumwollpflanzen, die in die mittige Fläche 50, in der die Pflanzenreihen Aufnahme finden, eintreten. Das abgestreifte Material wird den Schneckenförderern 70 zugeführt, die das Material nach hinten durch die Öffnung 110 und zum quer erstreckenden Schneckenförderer 22 fördern.

Die sechseckige Antriebswelle 166 kann einteilig oder aus Abschnitten zusammengesetzt sein, und die Länge der Antriebswelle 166 ist so gewählt, dass sie der gewünschten Konfiguration der Ernteeinheiten 18 entspricht. Um den Reihenabstand zu ändern, löst der Bediener einfach den Halterungszusammenbau 80 auf der Führungsschiene 82 und verschiebt die Ernteeinheit 18 in die gewünschte Position. Das kegelförmige Antriebszahnrad 160 und die Rutschkopplung 168 bewegen sich mit der Ernteeinheit und gleiten auf der Antriebswelle 166 entlang, so dass die kegelförmigen Zahnräder 140 und 160 dauerhaft untereinander in Antriebsverbindung bleiben. Die Antriebseinrichtung 76 erlaubt es, Verlängerungen des Erntevorsatzes 20 an beiden Seiten des Erntevorsatzes 20 hinzuzufügen, und eine große Vielfalt an Reihenabstands- und Reihenkapazitätskonfigurationen sind verfügbar.

## Patentansprüche

1. Erntevorsatz (20) für eine Erntemaschine (10), mit einer in Querrichtung verstellbaren Ernteeinheit (18) zur Ernte von Pflanzen und einer Antriebseinrichtung (76), wobei die Antriebseinrichtung (76) eine sich quer zu einer Vorwärtsbewegungsrichtung des Erntevorsatzes (20) erstreckende Antriebswelle (166), die um ihre Achse (88) drehbar ist, ein Antriebszahnrad (160), das koaxial zur Antriebswelle (166) angeordnet ist und durch die Antriebswelle (166) antreibbar ist, und ein mit der Ernteeinheit (18) verbundenes Zahnrad (140) umfasst, das sich mit dem Antriebszahnrad (160) im Eingriff befindet, das Antriebszahnrad (160) auf der Antriebswelle (166) verschiebbar angeordnet und derart mit der Ernteeinheit (18) verbunden ist, dass es auch dann mit dem Zahnrad (140) im Eingriff steht, wenn die Ernteeinheit (18) quer verschoben wird, **dadurch gekennzeichnet, dass** ein Halterungszusammenbau (80) die Ernteeinheit (18) um die Achse (88) der Antriebswelle (166) schwenkbar am Erntevorsatz (20) haltert.

2. Erntevorsatz (20) nach Anspruch 1, **gekennzeichnet durch** eine auf der Antriebswelle (166) befestigte, gemeinsam mit der Antriebswelle (166) drehbare Rutschkopplung (168), die auf der Antriebswelle (166) verschiebbar angeordnet ist, wobei das Antriebszahnrad (160) mit der Rutschkopplung (168) verbunden und mit ihr auf der Antriebswelle (166) verschiebbar ist und die Rutschkopplung (168) bis zu einer vorbestimmten Drehmomentsgrenze ein Drehmoment von der Antriebswelle (166) auf das Antriebszahnrad (160) überträgt.

3. Erntevorsatz(20) nach einem der Ansprüche 1 bis 2, **dadurch gekennzeichnet, dass** das Antriebszahnrad (160) und das mit der Ernteeinheit (18) verbundene Zahnrad (140) kegelförmig sind.

4. Erntevorsatz (20) nach einem der Ansprüche 1 bis 3, **dadurch gekennzeichnet, dass** das mit der Ernteeinheit (18) verbundene Zahnrad (140) um eine sich in Vorwärtsbewegungsrichtung und senkrecht zur Längsachse der Antriebswelle (166) dreht.

5. Erntevorsatz (20) nach einem der Ansprüche 1 bis 4, **dadurch gekennzeichnet, dass** die Ernteeinheit (18) zwei gegensinnig rotierende Abstreifwalzen (60) aufweist, die sich um in Vorwärtsbewegungsrichtung erstreckende erste bzw. zweite Achsen drehen, wobei das mit der Ernteeinheit (18) verbundene Zahnrad (140) direkt mit der ersten Abstreifwalze (60) verbunden ist.

6. Erntevorsatz (20) nach einem der Ansprüche 1 bis 5, **gekennzeichnet durch** erste und zweite Lagerzusammenbauten (114, 124), die an der Ernteeinheit (18) befestigt und mit ihr in Querrichtung verschiebbar sind, wobei sich die Antriebswelle (166) **durch** die Lagerzusammenbauten (114, 124) erstreckt und das Antriebszahnrad (160) und ggf. die Rutschkopplung (168) zwischen den Lagerzusammenbauten verschiebbar auf der Antriebswelle (166) angeordnet sind.

7. Erntevorsatz (20) nach Anspruch 6, **dadurch gekennzeichnet, dass** die Lagerzusammenbauten (114, 124) einen kanalförmigen Träger (116, 126) bildende Elemente (117, 118, 127, 128) umfassen, die in einem Bereich nahe des Antriebszahnrads (160) und des angetriebenen Zahnrads (140) einen steifen kastenförmigen Rahmenaufbau bereitstellen, so dass das Spiel der Zahnräder (140, 160) und das Geräusch minimiert sind.

## Claims

1. A harvesting header (20) for a harvesting machine (10), with a harvesting unit (18) adjustable in a transverse direction, for harvesting plants, and drive device (76), wherein the drive device (76) comprises a drive shaft (166) which extends transverse to a direction of forward movement of the harvesting header (20) and is rotatable about its axis (88), a drive gearwheel (160) which is arrange coaxial with the drive shaft (166) and can be driven by the drive shaft (166), and a gearwheel (140) which is coupled to the harvesting unit (18) and is in engagement with the drive gearwheel (160), the drive gearwheel (160) being slidably arranged on the drive shaft (166) and being so coupled to the harvesting unit (18) that it remains in engagement with the gearwheel (140) even when the harvesting unit (18) is shifted transversely, **characterized in that** a bracket assembly (80) retains the harvesting unit (18) on the harvesting header (20) pivotally about the axis (88) of the drive shaft (116).

2. A harvesting header (20) according to claim 1, **characterized by** a slipping clutch (168) fixed on and rotatable in common with the drive shaft (166) and slidably arranged on the drive shaft (166), wherein the drive gearwheel (160) is connected to the slipping clutch (168) and can slide therewith on the drive shaft (166), and the slipping clutch (168) transmits torque from the drive shaft (166) to the drive gearwheel (160) up to a predetermined torque limit.

3. A harvesting header (20) according to claim 1 or 2, **characterized in that** the drive gearwheel (160) and the gearwheel (140) coupled to the harvesting unit (18) are bevel gears.

4. A harvesting header (20) according to any of claims 1 to 3, **characterized in that** the gearwheel (140) coupled to the harvesting unit (18) turns about an axis extending in the direction of forward movement and perpendicular to the longitudinal axis of the drive shaft (166).

5. A harvesting header (20) according to any of claims 1 to 4, **characterized in that** the harvesting unit (18) comprises two counter-rotating stripping rollers (60) which turn about first and second axes respectively extending in the direction of forward movement, wherein the gearwheel (140) coupled to the harvesting unit (18) is directly connected to the first stripping roller (60).

6. A harvesting header (20) according to any of claims1 to 5, **characterized by** first and second bearing assemblies (114, 124) which are fixed on the harvesting unit (18) and can slide therewith in the transverse direction, wherein the drive shaft (166) extends through the bearing assemblies (114, 124) and the drive gearwheel (160) and optionally the slipping clutch (168) are arranged slidably on the drive shaft (166) between the bearing assemblies.

7. A harvesting header (20) according to claim 6, **characterized in that** the bearing assemblies (114, 124) comprise elements (117, 118, 127, 128) forming a support (116, 126) of channel form, which elements provide a stiff frame structure of box form in a region near to the drive gearwheel (160) and the driven gearwheel (140), so that play of the gearwheels (140, 160) and noise are minimised.

## Revendications

1. Tête de récolte (20) pour machine de récolte (10) comportant une unité de récolte (18), réglable en direction transversale pour la récolte de plantes et un système d'entraînement (76), le système d'entraînement (76) se composant :
- d'un arbre d'entraînement (166) s'étendant transversalement à la direction de déplacement vers l'avant de la tête de récolte (20) et qui peut tourner sur son axe (88),
- d'un engrenage d'entraînement (160), monté coaxial à l'arbre d'entraînement (166), et qui peut être entraîné par l'arbre d'entraînement (166),
- et d'un engrenage (140), réuni à l'unité de récolte (18) et qui se trouve en prise avec l'engrenage d'entraînement (160), l'engrenage d'entraînement (160) étant monté déplaçable sur l'arbre d'entraînement (166), et réuni à l'unité de récolte (18) d'une manière telle qu'il est en prise également avec l'engrenage (140) quand l'unité de récolte (18) est déplacée transversalement,
**caractérisée en ce qu'**une structure de maintien (80) maintient l'unité de récolte (18) pivotante autour de l'axe (88) de l'arbre d'entraînement (166) à la tête de récolte (20).

2. Tête de récolte (20) selon la revendication 1, **caractérisée par** un accouplement à glissement (168) fixé sur l'arbre d'entraînement (166) et pouvant tourner en même temps que l'arbre d'entraînement (166), qui est monté déplaçable sur l'arbre d'entraînement (166), l'engrenage d'entraînement (160) étant relié à l'accouplement à glissement (168), et déplaçable avec lui sur l'arbre d'entraînement (166), et l'accouplement à glissement (168) transmettant à l'engrenage d'entraînement (160) un couple de rotation de l'arbre d'entraînement (166), jusqu'à une limite prédéterminée de couple de rotation.

3. Tête de récolte (20) selon l'une ou l'autre des revendications 1 ou 2, **caractérisée en ce que** l'engrenage d'entraînement (160) et l'engrenage (140) relié à l'unité de récolte (18) sont des engrenages coniques.

4. Tête de récolte (20) selon l'une quelconque des revendications 1 à 3, **caractérisée en ce que** l'engrenage (140) relié à l'unité de récolte (18) tourne autour d'un axe orienté dans la direction d'avance et perpendiculaire à l'axe longitudinal de l'arbre d'entraînement (166).

5. Tête de récolte (20) selon l'une quelconque des revendications 1 à 4, **caractérisée en ce que** l'unité de récolte (18) se compose de deux cylindres de raclage (60) tournant en sens contraires, qui tournent autour d'un premier et d'un second axe s'étendant dans la direction d'avance, l'engrenage (140) relié à l'unité de récolte (18) étant relié directement au premier cylindre de raclage (60).

6. Tête de récolte (20) selon l'une quelconque des revendications 1 à 5, **caractérisée par** une première et une seconde structures de paliers (114, 124), qui sont fixées à l'unité de récolte (18) et qui sont déplaçables transversalement avec elle, l'arbre d'entraînement (166) s'étendant à travers les structures de paliers (114, 124), et l'engrenage d'entraînement (160) et selon le cas l'accouplement à glissement (168) étant montés déplaçables sur l'arbre d'entraînement (166) entre les structures de paliers.

7. Tête de récolte (20) selon la revendication 6, **caractérisée en ce que** les structures de paliers (114, 124) se composent d'éléments (117, 118, 127, 128) constituant des supports en forme de canaux (116, 126), qui, dans une région proche de l'engrenage d'entraînement (160) et de l'engrenage entraîné (140), créent une structure rigide en forme de boîte, de sorte que le jeu entre les engrenages (140, 160) et les bruits est minimisé.
